# EUROPEAN PATENT APPLICATION

(11) **EP 1 830 206 A1**
(43) Date of publication of application: **05.09.2007**
(21) Application number: 07103324.5
(22) Date of filing: 01.03.2007
(51) Int. Cl.: G02B 6/293

(54) **Multi-wavelength bidirectional optical transceiver having monitors**

(30) Priority: 02.03.2006 KR 20060020039
(71) Applicant: Samsung Electronics Co., Ltd., Suwon-si, Gyeonggi-Do (KR)
(72) Inventor: Lee, Gyu-Woong, Yeongtong-gu, Suwon-si Gyeonggi-do (KR); Shim, Chang-Sup, Yeongtong-gu, Suwon-si Gyeonggi-do (KR); Oh, Yun-Je, Yeongtong-gu, Suwon-si Gyeonggi-do (KR); Hwang, Seong-Taek, Yeongtong-gu, Suwon-si Gyeonggi-do (KR)
(74) Representative: Zimmer, Franz-Josef

(57) **Abstract**

A multi-wavelength bidirectional optical transceiver includes a plurality of optical transmitters for generating and outputting forward optical signals, a plurality of optical receivers for performing optoelectric conversion on reverse optical signals, a band splitter for outputting the forward optical signals that are input from the plurality of optical transmitters to outside the multi-wavelength bidirectional optical transceiver and for outputting reverse optical signals that are input from outside the multi-wavelength bidirectional optical transceiver to the plurality of optical receivers, a power splitter on an optical path between the plurality of optical transmitters and the band splitter for power-splitting the forward optical signals that are input from the plurality of optical transmitters and for outputting portions of the forward optical signals to the band splitter, and a plurality of monitors for performing optoelectric conversion on the remaining portions of the forward optical signals that are input from the power splitter.

## Description

### BACKGROUND OF THE INVENTION

### 1. Field of the Invention

The present invention generally relates to a bidirectional optical transceiver, and in particular, to a multi-wavelength bidirectional optical transceiver having monitors.

### 2. Description of the Related Art

Generally, a multi-wavelength bidirectional optical transceiver transmits/receives forward/reverse optical signals having different wavelengths. The multi-wavelength bidirectional optical transceiver includes a plurality of optical transmitters (TX) for generating and outputting forward optical signals and a plurality of optical receives (RX) for optoelectric conversion of reverse optical signals. If drift occurs in bias current applied to each of the optical transmitters, a distortion is caused in forward optical signals output from the optical transmitter. To prevent the distortion of the optical signal, a means for monitoring the output of the optical transmitter is required. For an example, a Vertical Cavity Surface Emitting Laser (VCSEL) can be mass-produced at low manufacturing cost size and requires low operating current to function as the optical transmitter. However, it requires more accurate output monitoring.

U.S Patent No. 6,898,219 entitled "Apparatus and Method for VCSEL Monitoring Using Scattering and Reflecting of Emitted Light", issued to Malone, et al. discloses another method for monitoring light of an optical signal output from a VCSEL, which is scattered from an end of an optical fiber. However, according to this method, since the VCSEL and a monitor must be located adjacent to each other, thus the method is difficult to apply to a multi-wavelength bidirectional optical transceiver.

Therefore, there is a need for a multi-wavelength bidirectional optical transceiver that enables output monitoring.

### SUMMARY OF THE INVENTION

The present invention provides a multi-wavelength bidirectional optical transceiver having a plurality of monitors.

According to one aspect of the present invention, there is provided a multi-wavelength bidirectional optical transceiver including a plurality of optical transmitters for generating and outputting forward optical signals, a plurality of optical receivers for performing optoelectric conversion on reverse optical signals, a band splitter for outputting the forward optical signals that are input from the plurality of optical transmitters to outside the multi-wavelength bidirectional optical transceiver and outputting reverse optical signals that are input from outside the multi-wavelength bidirectional optical transceiver to the plurality of optical receivers, a power splitter on an optical path between the plurality of optical transmitters and the band splitter for power-splitting the forward optical signals that are input from the plurality of optical transmitters and outputting portions of the forward optical signals to the band splitter, and a plurality of monitors for performing optoelectric conversion on the remaining portions of the forward optical signals that are input from the power splitter.

### BRIEF DESCRIPTION OF THE DRAWINGS

The above features and advantages of the present invention will become more apparent from the following detailed description when taken in conjunction with the accompanying drawings in which:
FIG. 1 illustrates a multi-wavelength bidirectional optical transceiver according to an embodiment of the present invention;
FIG. 2 is a view for explaining a process in which the multi-wavelength bidirectional optical transceiver of FIG. 1 transmits forward optical signals; and
FIG. 3 is a view for explaining a process in which the multi-wavelength bidirectional optical transceiver of FIG. 1 receives reverse optical signals.

### DETAILED DESCRIPTION

An exemplary embodiment of the present invention will now be described in detail with reference to the annexed drawings. For the purposes of clarity and simplicity, a detailed description of known functions and configurations incorporated herein has been omitted for conciseness.

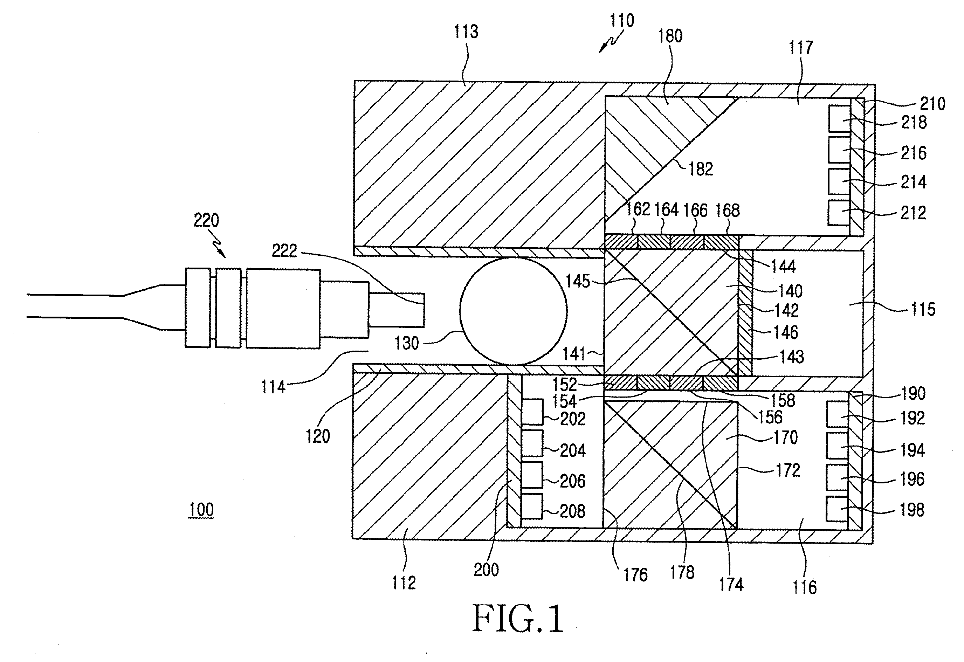

FIG. 1 illustrates a multi-wavelength bidirectional optical transceiver 100 according to an embodiment of the present invention. As shown, the multi-wavelength bidirectional optical transceiver 100 includes a housing 110, a band splitter 140, a power splitter 170, a reflector 180, first through fourth forward wavelength selective filters 152 - 158, first through fourth reverse wavelength selective filters 162 - 168, first through fourth optical transmitters 192 - 198, first through fourth optical receivers 212 - 218, first through fourth monitors 202 - 208, a lens barrel 120, and a lens 130.

The housing 110 includes central receiving units 114 and 115 at its center, first and second side receiving units 116 and 117 at both sides of the central receiving units 114 and 115 to communicate with the central receiving units 114 and 115 through openings, and first and second blocks 112 and 113 that define the central receiving units 114 and 115, together with the first and second side receiving units 116 and 117. The first and second blocks 112 and 113 are positioned in the fore portion of the housing 110, and the first and second side receiving units 116 and 117 are positioned in the rear portion of the housing 110.

The lens barrel 120 is inserted into the fore portion of the central receiving units 114 and 115 and is adhered closely to opposing inner sides of the first and second blocks 112 and 113. The lens barrel 120 has a hole penetrating its center, and the lens 130 is inserted into and fixed to the hole.

In the lens 130, the rear portion faces an input/output face 141 of the band splitter 140, and the fore portion faces an end of an optical fiber cable 220. The lens 130 collimates first through fourth reverse optical signals output from the optical fiber cable 220 to output the results to the band splitter 140 and converges first through fourth forward optical signals input from the band splitter 140 into the end of the optical fiber cable 220. For the lens 130, a general biconvex lens may be used. The first through fourth forward optical signals having different wavelengths are included in a forward wavelength band, e.g., a 800nm band. The first through fourth reverse optical signals having different wavelengths are included in a reverse wavelength band, e.g., a 1300nm band.

The band splitter 140 is positioned in the rear portion of the central receiving units 114 and 115 and is supported by a locking protrusion of the central receiving units 114 and 115. The band splitter 140 includes the input/output face 141 facing the lens 130, a reflecting face 142 positioned in the opposite side of the input/output face 141, an input face 143 facing the first through fourth forward wavelength selective filters 152 - 158, an output face 144 facing the first through reverse wavelength selective filters 162 - 168, and a splitting face 145 for a selective reflection or penetration according to a wavelength band and an input direction. A high reflection member 146 is deposited on the reflecting face 142. The first through fourth reverse optical signals that are input to the input/output face 141 are input to the reflecting face 142 after penetrating the splitting face 145. The first through fourth reverse optical signals that are reflected by the high reflection member 146 penetrate the output face 144 after being reflected by the splitting face 145. The first through fourth forward optical signals that are input to the input face 143 penetrate the input/output face 141 after being reflected by the splitting face 145. The splitting face 145 is inclined at 45° with respect to a straight-line optical path before or after a bent portion so that optical paths of the forward or reverse optical signals can be bent at 45°.

The first through fourth forward wavelength selective filters 152 - 158 are positioned to stop the opening of the first side receiving unit 116 and is supported by an inner wall of the housing 110 that defines the first side receiving unit 116 and the locking protrusion of the housing 110 in the first side receiving unit 116. The first through fourth forward wavelength selective filters 152 - 158 selectively filter the first through fourth forward optical signals. An n^{th} forward wavelength selective filter selectively filters only an n^{th} forward optical signal and blocks optical signals of other wavelengths. Here, n is a natural number that is less than 4.

The power splitter 170 is positioned in the first side receiving unit 116 and is supported by the locking protrusion in the first side receiving unit 116. The power slitter 170 includes a first output face 174 facing the first through fourth forward wavelength selective filters 152 - 158, an input face 172 facing the first through fourth optical transmitters 192 - 198, a second output face 176 positioned in the opposite side of the input face 172 and facing the first through fourth optical receivers 202 - 208, and a splitting face 178 for reflecting a portion of an input optical signal and penetrating the remaining portion of the input optical signal. The first through fourth forward optical signals input to the input face 172 are power-split by the splitting face 178. Portions of the first through fourth forward optical signals reflected by the splitting face 178 penetrate the first output face 174 and the remaining portions penetrate the splitting face 178 and then second output face 176. The splitting face 178 is inclined at 45° with respect to a straight-line optical path before or after a bent portion to bend optical paths at 45°.

The first through fourth optical transmitters 192 - 198 are integrated onto a single substrate 190, and the substrate 190 is positioned in the first side receiving unit 116 and supported by an outer wall of the housing 110 that defines the first side receiving unit 116. The first through fourth optical transmitters 192 - 198 generate and output the first through fourth forward optical signals, respectively. Each of the forward optical signals has been modulated by corresponding data. An n^{th} optical transmitter generates and outputs an n^{th} forward optical signal. For the optical transmitters 192 - 198, a general Vertical Cavity Surface Emitting Laser (VCSEL) may be used.

The first through fourth monitors 202 - 208 are integrated onto a single substrate 200, and the substrate 200 is positioned in the first side receiving unit 116 and supported by the first block 112. The first through fourth monitors 202 - 208 performs optoelectric conversion on the first through fourth forward optical signals that penetrate the power splitter 170, respectively. An n^{th} monitor performs optoelectric conversion on an n^{th} forward optical signal. It is possible to monitor the normal operations of the first through fourth optical transmitters 192 - 198 based on electric signals output from the first through fourth monitors 202 - 208. For the first through fourth monitors 202 - 208, a general photodiode may be used.

The first through fourth reverse wavelength selective filters 162 - 168 are positioned to stop the opening of the second side receiving unit 117 and are supported by an inner wall of the housing 110 that defines the second side receiving unit 117 and a locking protrusion of the housing 110 in the second side receiving unit 117. The first through fourth reverse wavelength selective filters 162 - 168 selective filters the first through fourth reverse optical signals, respectively. An n^{th} reverse wavelength selective filter is arranged on an optical path of an n^{th} reverse optical signal, selectively filters only an n^{th} reverse optical signal, and blocks optical signals of other wavelengths.

The reflector 180 is positioned in the second side receiving unit 117 and is supported by the second block 113. The reflector 180 includes a reflecting face 182 facing the first through fourth reverse wavelength selective filters 162 - 168 and the first through fourth optical receivers 212 - 218. The first through fourth reverse optical signals are reflected by the reflecting face 182. The reflecting face 182 is inclined at 45° with respect to a straight-line optical path before or after a bent portion to bend optical paths at 45°.

The first through fourth optical receivers 212 - 218 are integrated onto a single substrate 210, and the substrate 210 is positioned in the second side receiving unit 117 and supported by an outer wall of the housing 110 that defines the second side receiving unit 117. The first through fourth optical receivers 212 - 218 perform optoelectric conversion on the first through fourth forward optical signals that are reflected by the reflector 180, respectively. An n^{th} optical receiver performs optoelectric conversion on an n^{th} forward optical signal. Data can be acquired from electric signals output from the first through fourth optical receivers 212 - 218. For the first through fourth optical receivers 212 - 218, a general photodiode may be used.

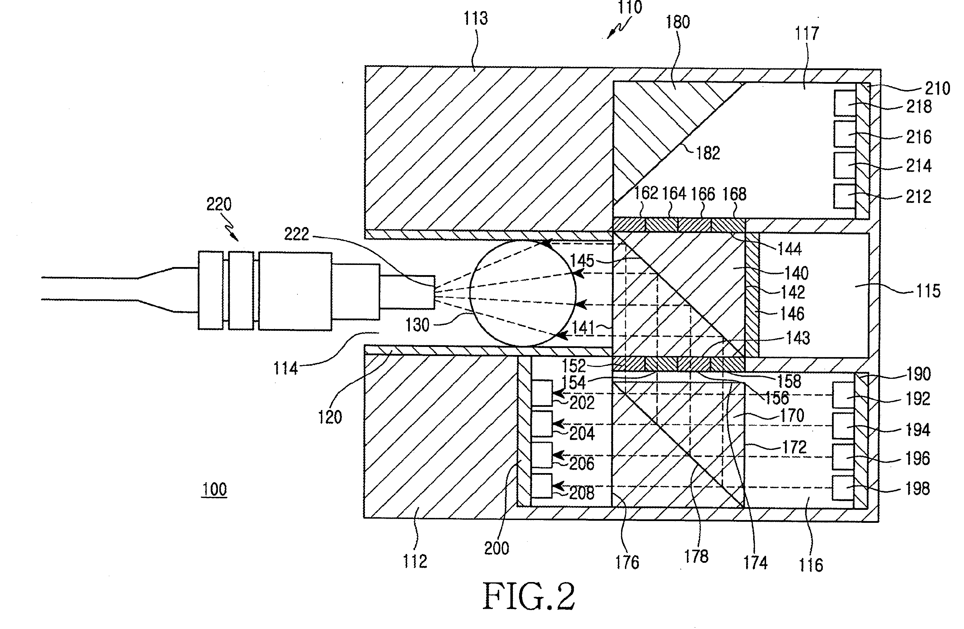

FIG. 2 is a view for illustrating the process in which the multi-wavelength bidirectional optical transceiver 100 of FIG. 1 transmits forward optical signals. The first through fourth optical transmitters 192 - 198 output the first through fourth forward optical signals to the power splitter 170, and the power splitter 170 power-splits the first through fourth forward optical signals. Portions of the power-split first through fourth forward optical signals are output to the first through fourth forward wavelength selective filters 152 - 158, and the remaining portions of the power-split first through fourth forward optical signals are output to the first through fourth monitors 202 - 208. The first through fourth monitors 202 - 208 perform optoelectric conversion on the first through fourth forward optical signals that are input from the power splitter 170. The first through fourth forward wavelength selective filters 152 - 158 selectively filter the first through fourth forward optical signals that are input from the power splitter 170. The band splitter 140 reflects the first through fourth optical signals that are input from the first through fourth forward wavelength selective filters 152 - 158 to the lens 130, and the lens 130 converges the first through fourth forward optical signals to an end 222 of the optical fiber cable 220. Thereafter, the first through fourth forward optical signals are transmitted through the optical fiber cable 220.

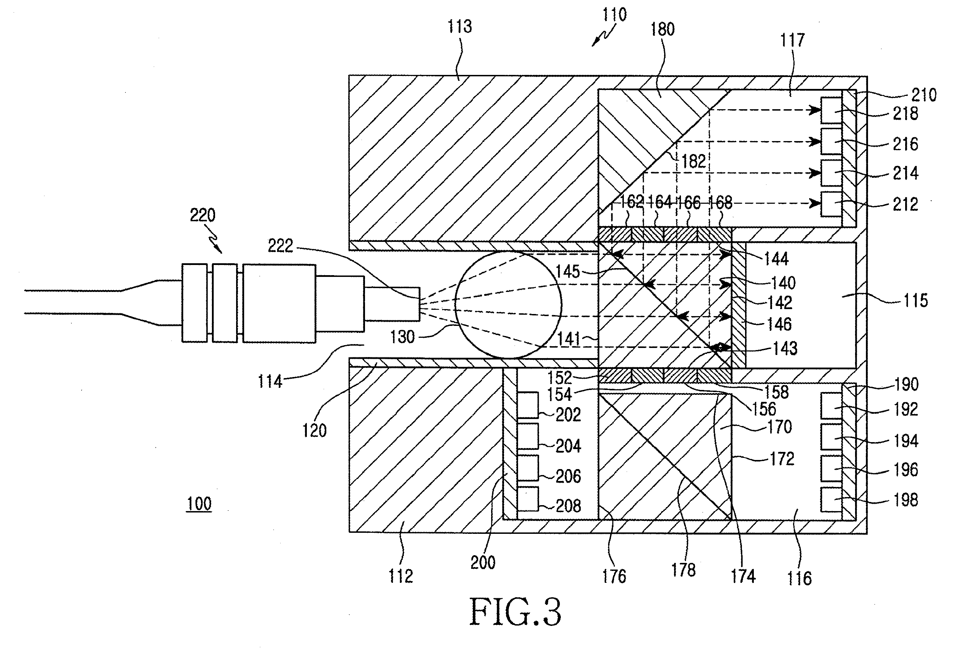

FIG. 3 is a view for illustrating the process in which the multi-wavelength bidirectional optical transceiver 100 of FIG. 1 receives reverse optical signals. The first through fourth reverse optical signals that are output from the end 222 of the optical fiber cable 220 are collimated by the lens 130, and the collimated first through fourth reverse optical signals are reflected by the band splitter 140 to the first through fourth reverse wavelength selective filters 162 - 168. The first through fourth wavelength selective filters 162 - 168 selectively filter the first through fourth reverse optical signals that are input from the band splitter 140. The reflector 180 reflects the first through fourth forward optical signals that are input from the first through fourth reverse wavelength selective filters 162 - 168 to the first through fourth optical receivers 212 - 218, and the first through fourth optical receivers 212 - 218 perform optoelectric conversion on the reflected first through fourth reverse optical signals.

As described above, the multi-wavelength bidirectional optical transceiver according to the present invention includes a band splitter and a power splitter that are used to easily implement the output monitoring.

While the present invention has been shown and described with reference to a preferred embodiment thereof, it will be understood by those skilled in the art that various changes in form and details may be made therein without departing from the spirit and scope of the invention.

## Claims

1. A multi-wavelength bidirectional optical transceiver comprising:
a plurality of optical transmitters (192 - 198) for generating and outputting forward optical signals;
a plurality of optical receivers (212 - 218) for performing optoelectric conversion on reverse optical signals;
a band splitter (140) for outputting the forward optical signals that are input from the plurality of optical transmitters to outside the multi-wavelength bidirectional optical transceiver and for outputting reverse optical signals that are input from outside the multi-wavelength bidirectional optical transceiver to the plurality of optical receivers;
a power splitter (170) on an optical path between the plurality of optical transmitters and the band splitter for power-splitting the forward optical signals that are input from the plurality of optical transmitters and for outputting portions of the forward optical signals to the band splitter; and
a plurality of monitors (202 - 208) for performing optoelectric conversion on the remaining portions of the forward optical signals that are input from the power splitter.

2. The multi-wavelength bidirectional optical transceiver of claim 1, further comprising a reflector (180) on an optical path between the band splitter and the plurality of optical receivers for reflecting the reverse optical signals that are input from the band splitter to the plurality of optical receivers.

3. The multi-wavelength bidirectional optical transceiver of claim 1 or 2, further comprising a plurality of forward wavelength selective filters (152 - 158) on the optical path between the optical path between the band splitter and the plurality of optical transmitters for selectively filtering the first through fourth forward optical signals.

4. The multi-wavelength bidirectional optical transceiver of any of claims 1 - 3, further comprising a plurality of reverse wavelength selective filters (162 - 168) on the optical path between the optical path between the band splitter and the plurality of optical receivers for selectively filtering the first through fourth reverse optical signals.

5. The multi-wavelength bidirectional optical transceiver of any of claims 1 - 4, wherein each of the optical transmitters is a Vertical Cavity Surface Emitting Laser (VCSEL).

6. The multi-wavelength bidirectional optical transceiver of any of claims 1 - 5, wherein the band splitter comprises a splitting face (145) is inclined at 45° to allow the optical paths of the forward or reverse optical signals can be bent at 45°.

7. The multi-wavelength bidirectional optical transceiver of any of claims 1 - 6, wherein the forward optical signals having different wavelengths are included in a forward wavelength band of 800 nm band.

8. The multi-wavelength bidirectional optical transceiver of any of claims 1-7, wherein the reverse optical signals having different wavelengths are included in a reverse wavelength band of 1300 nm band.
